# EUROPÄISCHE PATENTSCHRIFT

(11) **EP 1 736 364 B1**
(45) Veröffentlichungstag und Bekanntmachung des Hinweises auf die Patenterteilung: **23.04.2008**
(21) Anmeldenummer: 06010650.7
(22) Anmeldetag: 24.05.2006
(51) Int. Cl.: B60R 13/01, B60R 5/04

(54) **Laderaumfunktionsvorrichtung für ein Kraftfahrzeug**
Functional device for a vehicle luggage compartment
Dispositif fonctionnel pour compartiment à bagages de véhicule

(30) Priorität: 24.06.2005 DE 102005031070
(43) Veröffentlichungstag der Anmeldung: 27.12.2006
(73) Patentinhaber: BOS GmbH & Co. KG, 73760 Ostfildern (DE)
(72) Erfinder: Bohlke, Hartmut, 42369 Wuppertal (DE); Sitzler, Wolfgang, 42111 Wuppertal (DE)
(74) Vertreter: Patentanwälte Ruff, Wilhelm, Beier, Dauster & Partner

(56) Entgegenhaltungen:
- EP-A- 1 145 908
- EP-A- 1 447 311
- EP-A- 1 650 082
- DE-A1- 4 016 707
- DE-A1- 10 149 186
- DE-A1- 10 332 181
- US-A- 6 003 920
- US-B1- 6 416 103

## Beschreibung

Die Erfindung betrifft eine Laderaumfunktionsvorrichtung für ein Kraftfahrzeug, insbesondere einen Personenkraftwagen, mit wenigstens zwei zueinander parallelen Führungsschienen, die wenigstens einer Laderaumbegrenzungsfläche zugeordnet sind, wobei in jeder Führungsschiene wenigstens ein Funktionsschlitten längs verfahrbar gelagert ist, und wobei Blockiermittel zum Arretieren des Funktionsschlittens relativ zu der Führungsschiene vorgesehen sind.

Eine derartige Laderaumfunktionsvorrichtung ist aus der DE 101 49 186 B4 bekannt. Die bekannte Laderaumfunktionsvorrichtung weist eine Lastöse auf, die nach Art eines Funktionsschlittens in einer Führungsschiene längsverschiebbar geführt ist. Um die Lastöse in der Führungsschiene formschlüssig arretieren zu können, sind Blockiermittel vorgesehen, die einen manuell betätigbaren Rastzapfen an der Lastöse einerseits und eine in der Führungsschiene integrierte Rastlochschiene andererseits umfassen. An der Lastöse kann ein Verzurrgurt oder ähnliches festgelegt werden.

Dokument EP-1 447 311-A1 offenbart eine Laderaumvorrichtung für ein Kraftfahrzeug gemäß dem Oberbegriff des Anspruchs 1, mit einer Platte und einem Antriebsmechanismus zum Heben und Senken dieser Platte.

Aufgabe der Erfindung ist es, eine Laderaumfunktionsvorrichtung der eingangs genannten Art zu schaffen, die eine verbesserte Ladegutsicherung ermöglicht.

Diese Aufgabe wird dadurch gelöst, dass jeder Führungsschiene wenigstens ein Funktionsschlitten zugeordnet ist, und dass eine zumindest abschnittsweise formstabile Quererstreckungseinheit vorgesehen ist, die sich zwischen den Führungsschienen erstreckt und mit den Funktionsschlitten verbunden ist. Dadurch ist es möglich, eine verbesserte Aufteilung des Laderaumes und auch eine verbesserte Ladegutsicherung vorzunehmen. Vorzugsweise erstrecken sich die Führungsschienen an gegenüberliegenden Seitenbereichen des Laderaumes, so dass mittels der Quererstreckungseinheit der Laderaum über zumindest weitgehend seine gesamte Breite durch die Quererstreckungseinheit beaufschlagt werden kann.

In weiterer Ausgestaltung der Erfindung ist die Quererstreckungseinheit in wenigstens einer Ebene teleskopierbar ausgeführt. Vorzugsweise ist die Quererstreckungseinheit in Fahrzeughochrichtung und/oder in Fahrzeuglängsrichtung teleskopierbar. Dadurch kann die Quererstreckungseinheit unterschiedliche Funktionen erfüllen. So kann sie insbesondere bei einer Teleskopierbarkeit in Fahrzeughochrichtung bis zu einer Fahrzeugbordkante oder bis zu einem Dachhimmel ausgezogen werden. Bei einer Teleskopierbarkeit in Fahrzeuglängsrichtung kann sie insbesondere zur Ladegutsicherung über lediglich einen Teilbereich der Länge des Laderaumes oder über weitgehend die gesamte Länge des Laderaumes erstreckt werden.

In weiterer Ausgestaltung der Erfindung ist die Quererstreckungseinheit als ebener Rahmen ausgeführt. Der Rahmen ist vollständig formstabil gestaltet und weist vorzugsweise insgesamt vier Rahmenprofile auf, die nach Art eines Vierecks miteinander verbunden sind.

In weiterer Ausgestaltung der Erfindung ist in dem Rahmen eine Netzanordnung aufgespannt. Die Netzanordnung ist vorzugsweise elastisch ausgeführt, um einer Teleskopierbarkeit des Rahmens folgen zu können. Alternativ weist die Netzanordnung in der komprimierten Stellung des Rahmens einen losen Ausgleichsbereich auf, der in der teleskopförmig ausgezogenen Stellung des Rahmens gestreckt gestaltet ist. Bei einer derartigen Ausführung muss die Netzanordnung zwar ebenfalls flexibel ausgeführt sein. Sie kann aber zumindest weitgehend unelastisch gestaltet sein. Die Kombination des Rahmens mit der Netzanordnung dient insbesondere zur Ladegutsicherung an einer entsprechenden Laderaumbegrenzungsfläche. Unter den Laderaumbegrenzungsflächen sind der Laderaumboden, Laderaumseitenwandungen und front- und heckseitige Laderaumwandungen zu verstehen, wobei die front- und heckseitigen Laderaumwandungen durch eine Innenseite einer Heckklappe oder Hecktüre bzw. durch eine Rückseite einer Rückenlehnenanordnung einer Fondsitzbank gebildet sind.

In weiterer Ausgestaltung der Erfindung ist der Rahmen mit wenigstens einem Paar von einander gegenüberliegenden Rahmenschenkeln ausgeführt, die teleskopierbar gestaltet sind. Die Teleskopierbarkeit der Rahmenschenkel wird durch teleskopförmig ineinander geführte Schenkelprofile erzielt.

In weiterer Ausgestaltung der Erfindung ist die Quererstreckungseinheit als formstabile Platte ausgeführt. Diese dient insbesondere zur Laderaumabtrennung oder Laderaumaufteilung.

In weiterer Ausgestaltung der Erfindung ist die Quererstreckungseinheit an den Funktionsschlitten um eine quer zu Längsachsen der Führungsschienen verlaufende Schwenkachse schwenkbeweglich gelagert. Dadurch ist es möglich, die Quererstreckungseinheit zwischen horizontalen und aufrechten, d.h. in einem spitzen oder einem stumpfen Winkel nach oben ragenden Funktionspositionen auszurichten. Da zusätzlich auch die Funktionsschlitten in Längsrichtung der Führungsschienen verschiebbar sind, ist eine hohe Flexibilität für den Einsatz der Quererstreckungseinheit gewährleistet.

In weiterer Ausgestaltung der Erfindung sind Mittel zum lösbaren Arretieren des Rahmens an wenigstens einer laderaumfesten Begrenzungsfläche in wenigstens einer aufrechten Funktionsposition vorgesehen. Derartige Arretierungsmittel sind insbesondere manuell arretierbar oder lösbar. Vorzugsweise wirken die Arretierungsmittel formschlüssig mit entsprechenden Halte- oder Sicherungsaufnahmen im Bereich der Laderaumbegrenzungsflächen zusammen.

In weiterer Ausgestaltung der Erfindung sind Mittel zum Führen der Quererstreckungseinheit in wenigstens einer Führungsschiene vorgesehen, die in Abstand zu dem wenigstens einen Funktionsschlitten an der Quererstreckungseinheit angeordnet sind. Dadurch ist es möglich, die Quererstreckungseinheit in horizontal ausgerichteter Funktionsposition längs der Führungsschiene zu verschieben. Diese Ausgestaltung ist insbesondere vorteilhaft, falls die Quererstreckungseinheit relativ zu den Funktionsschlitten schwenkbeweglich gelagert ist.

In weiterer Ausgestaltung der Erfindung umfassen die Mittel zum lösbaren Arretieren die Mittel zum Führen der Quererstreckungseinheit. Dadurch wird eine Doppelfunktion erzielt, indem die Arretierungsmittel so ausgeführt sind, dass sie auch zur Führung der Quererstreckungseinheit in den Führungsschienen dienen können.

In weiterer Ausgestaltung der Erfindung sind in den aufrecht angeordneten Laderaumbegrenzungsflächen Funktionsaufnahmen zur Sicherung oder Führung der Quererstreckungseinheit in aufrechter Funktionsposition vorgesehen. Die Funktionsaufnahmen sind insbesondere als Halte- oder Sicherungsaufnahmen ausgeführt und vorzugsweise in den gegenüberliegenden Laderaumseitenwandungen integriert. Alternativ oder zusätzlich können entsprechende Halte- oder Sicherungsaufnahmen in der Rückseite der Rückenlehnenanordnung oder im Bereich der Innenseite einer Heckklappe oder Hecktür vorgesehen sein.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung einen Laderaum eines Personenkraftwagens mit einer Ausführungsform einer erfindungsgemäßen Laderaumfunktionsvorrichtung,
- Fig. 2: die Laderaumfunktionsvorrichtung nach Fig. 1 in anderer Funktionsposition,
- Fig. 3: in vergrößerter, perspektivischer Darstellung einen Ausschnitt der Laderaumfunktionsvorrichtung nach den Fig. 1 und 2,
- Fig. 4: die Laderaumfunktionsvorrichtung gemäß den Fig. 1 und 2 in einer weiteren Funktionsposition,
- Fig. 5: in vergrößerter, perspektivischer Darstellung einen weiteren Ausschnitt der Laderaumfunktionsvorrichtung nach den Fig. 1 bis 4,

- Fig. 6: die Laderaumfunktionsvorrichtung nach den Fig. 1 bis 5 in einer weiteren Funktionsposition,
- Fig. 7: die Laderaumfunktionsvorrichtung gemäß Fig. 6 mit einer horizontal ausgerichteten Quererstreckungseinheit,
- Fig. 8: die Ausführungsform nach Fig. 7, bei der die Quererstreckungseinheit in eine andere Horizontalposition verschoben ist,
- Fig. 9: die Ausführungsform nach den Fig. 7 und 8 mit teleskopförmig in Fahrzeuglängsrichtung ausgezogener Quererstreckungseinheit,
- Fig. 10: die Quererstreckungseinheit nach Fig. 9 in einer in Fahrzeuglängsrichtung nach hinten verschobenen Funktionsposition,
- Fig. 11: eine weitere Ausführungsform einer erfindungsgemäßen Laderaumfunktionsvorrichtung,
- Fig. 12: eine weitere Ausführungsform einer erfindungsgemäßen Laderaumfunktionsvorrichtung in einer ersten Funktionsposition,
- Fig. 13: die Laderaumfunktionsvorrichtung nach Fig. 12 in einer weiteren Funktionsposition,
- Fig. 14: eine weitere Ausführungsform einer erfindungsgemäßen Laderaumfunktionsvorrichtung und
- Fig. 15: die Laderaumfunktionsvorrichtung nach Fig. 14 in einer weiteren Funktionsposition.

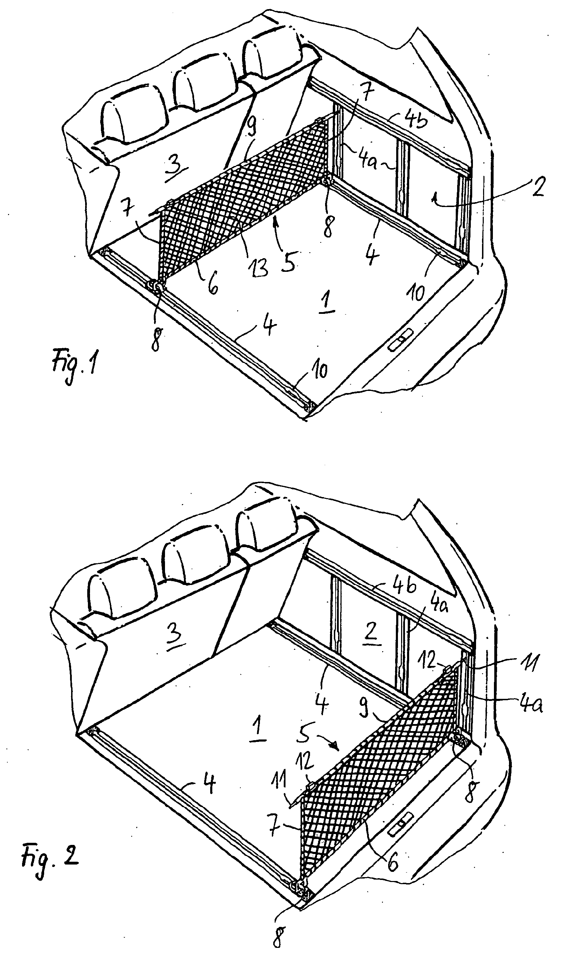

Ein Laderaum für einen Personenkraftwagen ist gemäß den Fig. 1 bis 11 mit einem Laderaumboden 1 versehen, der zu beiden Fahrzeugseiten hin durch jeweils eine Seitenwandung 2 und in normaler Fahrtrichtung nach vorne durch eine Rückseite einer Rückenlehnenanordnung 3 einer Fondsitzbank begrenzt ist. Nach hinten ist der Laderaum in grundsätzlich bekannter Weise durch eine Heckklappe oder eine Hecktüranordnung verschließbar. In dem Laderaumboden 1 sind an gegenüberliegenden Seitenrandbereichen zwei Führungsschienen 4 integriert, die sich über die gesamte Länge des Laderaumbodens 1 in Fahrzeuglängsrichtung erstrecken. Beide Führungsschienen 4 sind parallel zueinander ausgerichtet. Zudem sind in den gegenüberliegenden Seitenwandungen zwei Führungsschienen 4a, 4b integriert, wobei beim dargestellten Ausführungsbeispiel jeweils drei vertikal nach oben verlaufende und in gleichmäßigen Abständen zueinander angeordnete Führungsschienen 4a vorgesehen sind, die an einer Stoßkante zwischen Laderaumboden 1 und Seitenwandung 2 beginnen und knapp unterhalb einer Fahrzeugbordkante enden. Bündig abschließend mit den oberen Stirnrandbereichen der Führungsschienen 4a ist in jeder Seitenwandung 2 eine horizontal verlaufende Führungsschiene 4b integriert, die sich in Fahrzeuglängsrichtung längs der Seitenwandung über die Länge des Laderaumes erstreckt. Sowohl die Seitenwandungen als auch der Laderaumboden 1 bilden Laderaumbegrenzungsflächen. Die Integration der Führungsschienen 4, 4a, 4b in diese Laderaumbegrenzungsflächen bedeutet, dass die Führungsschienen in die jeweilige Laderaumbegrenzungsfläche eingelassen sind und mit ihrer Oberseite im wesentlichen bündig und fluchtend mit der jeweiligen Laderaumbegrenzungsfläche abschließen. Alle Führungsschienen 4 sind an entsprechenden Karosseriestrukturteilen in nicht näher dargestellter Weise crashsicher befestigt.

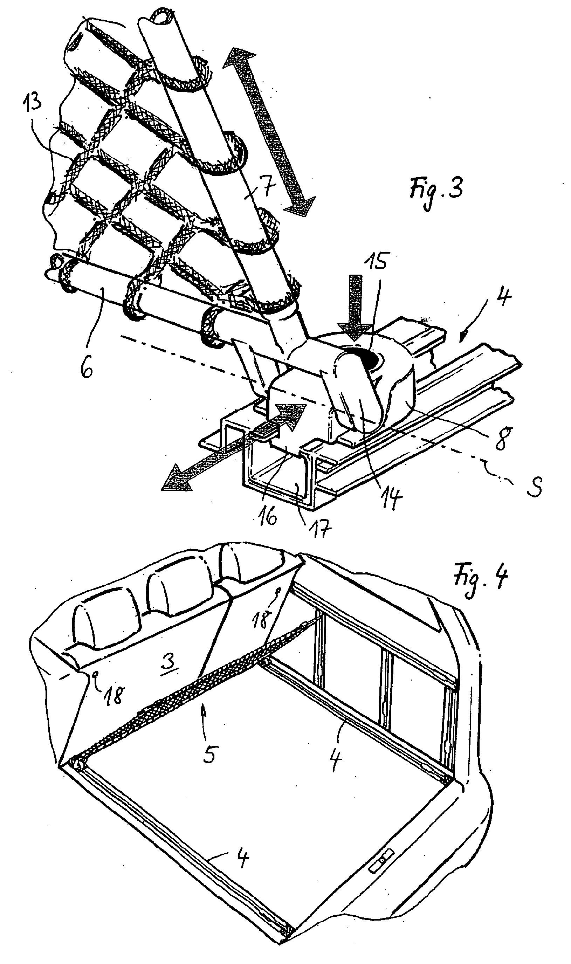

Jede Führungsschiene ist aus zwei ineinander geführten, C-förmigen Hohlprofilen aufgebaut, wie anhand der Fig. 3 erkennbar ist. Ein äußeres, nicht näher bezeichnetes Hohlprofil weist außenseitig mehrere Längsstege und Längsrippungen auf, mittels derer es in der jeweiligen Laderaumbegrenzungsfläche gesichert ist. In dem äußeren Hohlprofil ist passgenau ein inneres Rastprofil 17 gehalten, das sich über die gesamte Länge des äußeres Hohlprofils erstreckt und ein C-förmiges Querschnittsprofil aufweist. Beide Profile bilden somit einen zum Laderaum hin offenen Längsschlitz, in dem in nachfolgend näher beschriebener Weise Führungsschienen 8 längsverschiebbar geführt sein können. Das Rastprofil ist über die gesamte Länge der jeweiligen Führungsschiene 4, 4a, 4b mit einer Rastlochreihe versehen, in die ein Rastbolzen des Funktionsschlittens 8 eingreifen kann, um eine in Längsrichtung formschlüssige Arretierung des Funktionsschlittens 8 in der jeweiligen Führungsschiene 4 zu ermöglichen. Jeder Funktionsschlitten 8 weist einen Betätigungsknopf 15 auf, mittels dessen die Verriegelung des Funktionsschlittens 8 relativ zu der jeweiligen Führungsschiene 4, 4a, 4b hergestellt oder gelöst werden kann. Das Führungs- und Rastprinzip des Funktionsschlittens 8 relativ zu der Führungsschiene 4 entspricht einer Lastvorrichtung, wie sie aus der DE 101 49 186 B4 bekannt ist. Dieses Arretierprinzip aus der DE 101 49 186 B4 ist für die Arretierung der Funktionsschlitten 8 in den Führungsschienen 4, 4a, 4b verwendet worden, so dass für eine nähere Erläuterung dieses Arretierprinzips auf die DE 101 49 186 B4 verwiesen werden kann.

Jeder Funktionsschlitten 8 weist einen im Querschnitt (Fig. 3) T-förmigen Sicherungsabschnitt 16 auf, der die den Längsschlitz flankierenden Stegränder der Profile der Führungsschiene 4, 4a, 4b hintergreift und so die Sicherung des Funktionsschlittens 8 quer zur Längsrichtung der jeweiligen Führungsschiene 4, 4a, 4b übernimmt. Der Funktionsschlitten 8 ist somit gleitbeweglich an der jeweiligen Führungsschiene längsverschiebbar geführt.

Jede Führungsschiene 4, 4a, 4b weist an ihrer Oberseite eine Aussparung 10 auf, die so dimensioniert ist, dass der jeweilige Funktionsschlitten 8 an dieser Stelle aus der Führungsschiene 4 entnommen werden kann. Die Aussparung 10 ist somit etwas größer dimensioniert als eine Grundfläche des Sicherungsabschnittes 16 des Funktionsschlittens 8.

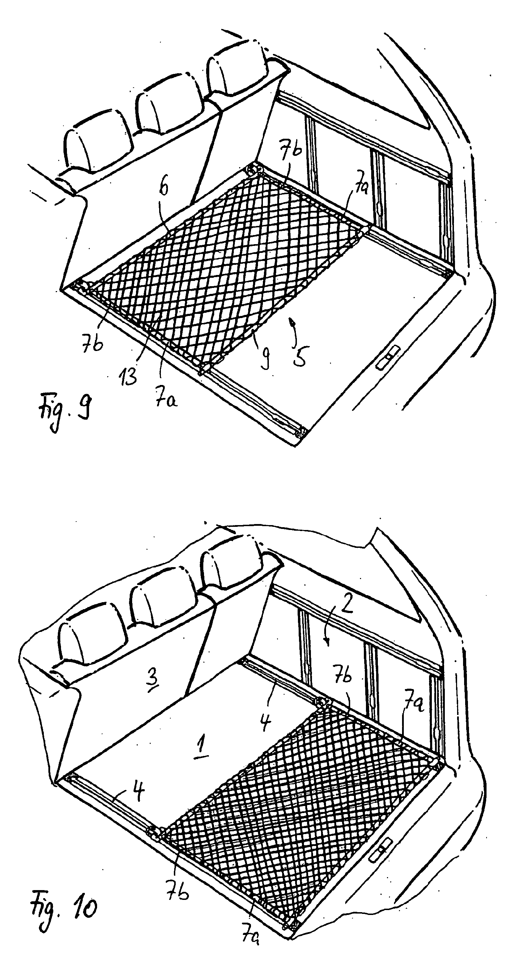

Bei der dargestellten Ausführungsform gemäß den Fig. 1 bis 10 sind insgesamt zwei Funktionsschlitten 8 vorgesehen, wobei jeweils ein Funktionsschlitten 8 in jeweils einer Führungsschiene 4 des Laderaumbodens 1 verschiebbar angeordnet ist. Wie anhand der Fig. 3 erkennbar ist, ist jeder Funktionsschlitten 8 mit einer Schwenklagerung versehen, an der eine Quererstreckungseinheit 5 um eine in Fahrzeugquerrichtung erstreckte Schwenkachse S schwenkbeweglich angeordnet ist. Die Quererstreckungseinheit 5 umfasst einen formstabilen Rahmen 6, 7, 9. Der Rahmen weist ein unteres Querprofil 6 sowie ein oberes Querprofil 9 auf, das parallel zu dem unteren Querprofil 6 ausgerichtet ist. Das obere und das untere Querprofil 6, 9 werden durch zwei teleskopierbare Längsprofile 7 miteinander zu dem viereckigen Rahmen verbunden. Jedes teleskopierbare Längsprofil 7 besteht, wie anhand der Fig. 9 und 10 erkennbar ist, aus zwei teleskopförmig ineinander verschiebbaren Längsprofilabschnitten 7a, 7b. Die teleskopförmig relativ zueinander verschiebbaren Längsprofilabschnitte 7a, 7b sind zwischen einer zusammengeschobenen Stellung gemäß den Fig. 1, 2, 7, 8 und einer auseinander gezogenen Stellung gemäß den Fig. 9 und 10 relativ zueinander verschiebbar. Dadurch kann zwangsläufig auch der Rahmen selbst unterschiedliche Größen aufweisen. Vorzugsweise sind den Längsprofilabschnitten 7a, 7b nicht näher dargestellte Arretiermittel zugeordnet, die die Länge des jeweiligen Längsprofiles des Rahmens in der eingestellten Stellung der Längsprofilabschnitte 7a, 7b zueinander fixieren. Dabei kann die Längenveränderbarkeit des jeweiligen Längsprofiles 7 stufenweise oder stufenlos erfolgen. Die Arretiermittel dienen dazu, die jeweils eingestellte Länge so zu arretieren, dass sich der gewünschte formstabile Rahmen ergibt.

In dem Rahmen aufgespannt ist ein Netz 13, dessen Aufspannfläche gemeinsam mit der Veränderung der Profillänge des Rahmens verändert werden kann. Hierzu ist das Netz 13 entweder derart elastisch ausgeführt, dass die Längenveränderung des Rahmens durch eine entsprechend elastische Nachgiebigkeit des Netzes 13 ausgeglichen werden kann, oder das Netz weist eine Längserstreckung auf, die der maximalen Längserstreckung der Längsprofile 7a, 7b entspricht. Für letzteren Fall ist das Netz 13 bei klein gestelltem Rahmen schlaff oder hängend gehalten.

Um die Quererstreckungseinheit 5 und damit insbesondere den Rahmen 6, 7, 9 an den Seitenwandungen 2 in einer aufrechten Position gemäß den Fig. 1, 2, 4 fixieren zu können, sind in dem oberen Querprofil 9 des Rahmens an seinen gegenüberliegenden Stirnenden Sicherungsstifte 11 integriert, die durch manuell betätigbare Schieber 12 in eine Arretierposition nach außen oder in eine Ruheposition nach innen verschoben werden können. Die Sicherungsstifte 11 können in entsprechende Nuten der in den Seitenwandungen 2 integrierten Führungsschienen 4a oder 4b eintauchen, so dass sie die Quererstreckungseinheit, nämlich den Rahmen einschließlich des aufgespannten Netzes, formschlüssig in der entsprechend aufrechten Position sichern.

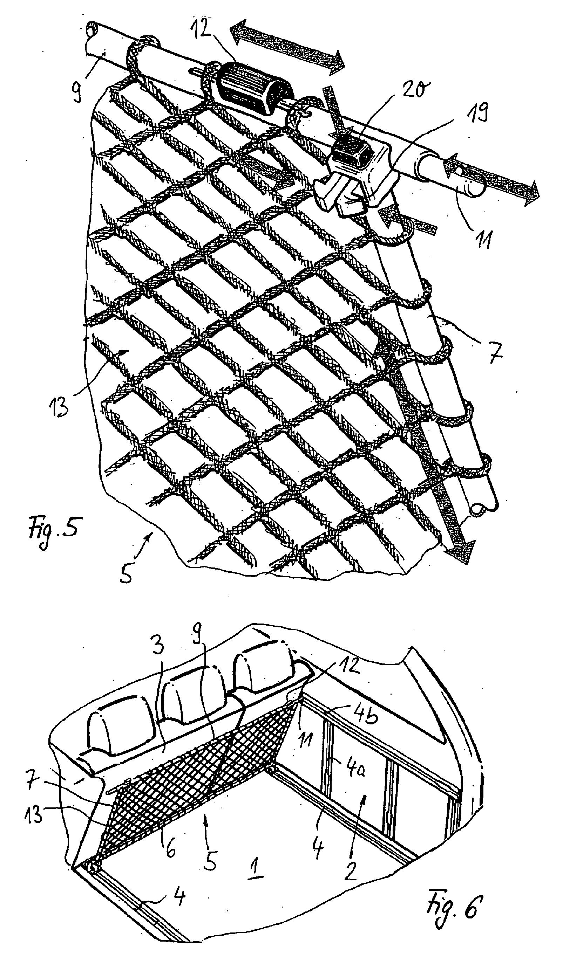

Um auch im Bereich der Rückseite der Rückenlehnenanordnung 3 eine sichere Fixierung des Rahmens 6, 7, 9 in einer aufrechten Funktionsposition zu ermöglichen (Fig. 6), sind in der Rückseite der Rückenlehnenanordnung 3 Halteaufnahmen 18 integriert. Wie anhand der Fig. 5 erkennbar ist, weist die Quererstreckungseinheit im Stoßbereich zwischen Längsprofil 7 und oberem Querprofil 9 jeweils ein Rastelement 19 auf, das zwei gegensinnig zueinander bewegliche Rastnasen umfasst. Die Bewegung der Rastnasen wird zum einen durch Federkraft und zum anderen durch eine Betätigungstaste 20 hervorgerufen, die auf die Rastnasen wirkt. Durch Drücken der Betätigungstaste 20 können die Rastnasen, die gegensinnig zueinander nach außen weisen, aufeinander zu bewegt werden. Sobald eine entsprechende Druckkraft auf die Betätigungstaste 20 entfernt wird, werden die Rastnasen durch Federkraft wieder nach außen gedrückt und können innerhalb der jeweiligen Halteaufnahme 18 einen entsprechenden Rastrand hintergreifen. Je nachdem, wie entsprechende Anlaufschrägen der Rastnasen ausgebildet sind, ist es auch möglich, die Rastnasen gegen die Halteaufnahme 18 zu drücken, wodurch diese automatisch gegeneinander bewegt werden und nach Durchtauchen der Rastöffnung der jeweiligen Halteaufnahmen 18 hinter dem entsprechenden Rastrand einrasten.

Die Quererstreckungseinheit 5 kann bei einem nicht dargestellten Ausführungsbeispiel auch im Bereich der Schwenklagerung von den Funktionsschlitten 8 gelöst werden. Hierzu sind entsprechend lösbare Befestigungsmittel vorgesehen.

Die Rastmittel 19, 20, die zur Befestigung des Rahmens 6, 7, 9 an der Rückenlehnenanordnung 3 dienen, können auch dazu eingesetzt werden, die Quererstreckungseinheit 5 zusätzlich zu den Funktionsschlitten 8 in den Führungsschienen 4 zu sichern und längs der Führungsschienen zu führen. Hierzu wird die Quererstreckungseinheit 5 einschließlich der Funktionsschlitten 8 in einfacher Weise im Bereich der Aussparungen 10 aus den Führungsschienen 4 entnommen, um 180° gedreht und mit entsprechend umgekehrten Führungsschienen 8 in die Aussparungen 10 und damit wieder in die Führungsschienen 4 eingesetzt. Nun kann die Quererstreckungseinheit 5 horizontal zum Laderaumboden 1 hin nach unten geschwenkt werden, wobei die Rastmittel 19 im Bereich der Aussparungen 10 in die Führungsschienen 4 eintauchen müssen. Die Rastnasen der Rastmittel 19 sind in ihrer federbelasteten, auseinandergedrückten Stellung derart begrenzt, dass die Rastnasen die Stegränder der Nut der jeweiligen Führungsschiene 4 hintergreifen, ohne dass sich die Rastnasen im Bereich des Längsschlitzes verklemmen.

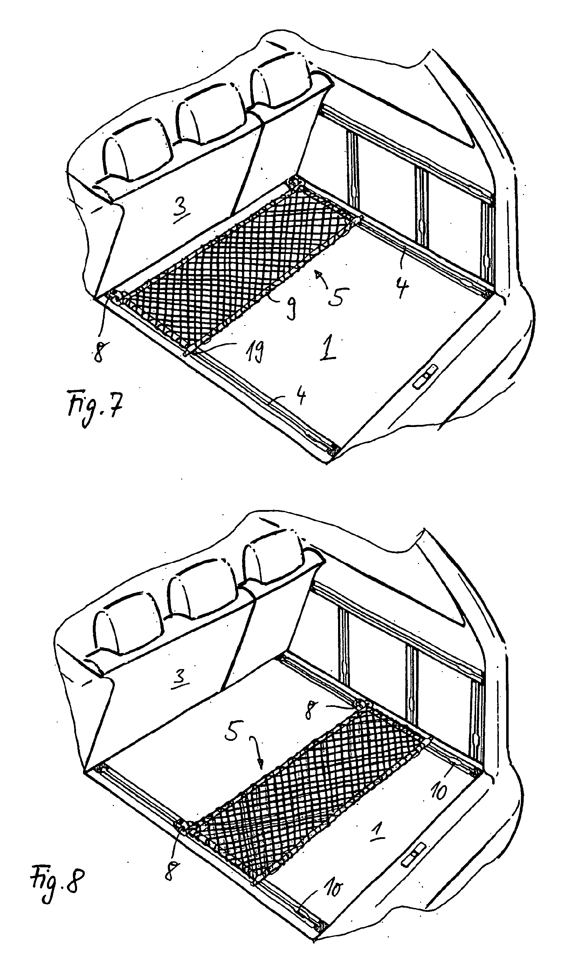

Vielmehr sind die Rastnasen auf Höhe der Längsschlitze der Führungsschienen 4 mit geringem Spiel ausgerichtet, so dass eine einfache Längsverschiebbarkeit der Quererstreckungseinheit 5 in dieser horizontalen Bodenposition (Fig. 7 bis 10) ermöglicht ist. Je nachdem, in welche Längsverstellungsposition die Längsprofile 7, 7a, 7b verstellt sind, ergibt sich für die Quererstreckungseinheit 5 eine Erstreckung in Fahrzeuglängsrichtung, die etwa einem Drittel der Länge des Laderaumbodens 1 oder etwas mehr als der Hälfte der Länge des Laderaumbodens 1 entspricht.

Die Quererstreckungseinheit 5 kann in dieser horizontalen Bodenposition insbesondere zur Sicherung von Ladegut auf dem Laderaumboden 1 eingesetzt werden. Hierzu wird die Quererstreckungseinheit 5 in noch aufrechter Position über das zu sichernde Ladegut geschwenkt, wodurch das Netz 13 sich nach oben auswölbt. Die Rastmittel 19 werden im Bereich der Aussparungen 10 in die Führungsschienen 4 eingeführt und anschließend wird die gesamte Quererstreckungseinheit 5 bzw. zumindest das obere Querprofil 9 so weit in Längsrichtung der Führungsschienen 4 verschoben, bis die Rastmittel 19 in einer Hinterschnittstellung im Bereich der Führungsschienen 4 positioniert sind.

Alternativ ist es bei einem nicht dargestellten Ausführungsbeispiel der Erfindung möglich, die Breite des Längsschlitzes jeder Führungsschiene 4, 4a, 4b an die Breite der Rastaussparung der Halteaufnahmen 18 anzupassen, so dass die Rastmittel 19 an beliebiger Stelle von oben her in die Führungsschienen 4 eingedrückt werden können und die Rastnasen der Rastmittel 19 durch die Längsschlitze der Führungsschienen 4 hindurchtauchen und die Stegränder des Längsschlitzes jeder Führungsschiene 4 im eingetauchten Zustand hintergreifen. Ein Lösen kann dadurch erfolgen, dass die Querstreckungseinheit einschließlich der Rastmittel bis zu den Aussparungen der Führungsschiene verschoben wird. Hier kommen die Rastmittel frei.

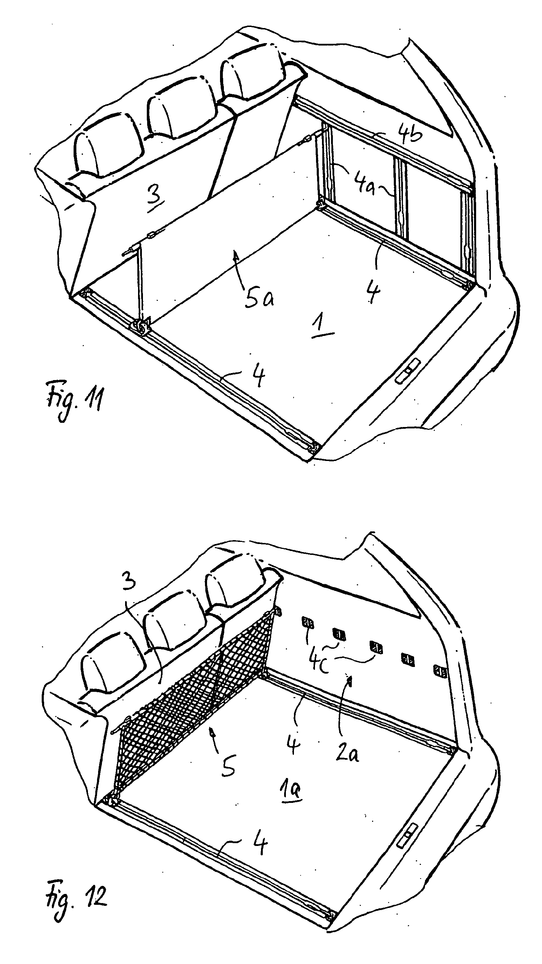

Die Ausführungsform nach Fig. 11 entspricht im wesentlichen der zuvor beschriebenen Ausführungsform mit dem Unterschied, dass als Quererstreckungseinheit eine formstabile Platte 5a vorgesehen ist, die im übrigen analog zu der Ausführungsform nach den Fig. 1 bis 10 an zwei Funktionsschlitten schwenkbeweglich gelagert ist und sich über die Breite des Laderaumes erstreckt. Die formstabile Platte 5a weist an ihrer der Schwenkachse gegenüberliegenden Stirnseite an gegenüberliegenden Seitenkanten Sicherungsstifte auf, die über Schieber zwischen einer Ruheposition und einer die Platte in den Führungsschienen 4a, 4b der Seitenwandungen 2 sichernden aufrechten Separierposition beweglich sind. Die Sicherungsstifte und die Betätigungsschieber sind analog dem zuvor beschriebenen Ausführungsbeispiel gestaltet, so dass zur näheren Erläuterung auf die Ausführungen zu der Ausführungsform nach den Fig. 1 bis 10 verwiesen wird. Auch die Funktionsschlitten entsprechen den Funktionsschlitten 8 nach den Fig. 1 bis 10, so dass auch hierauf an dieser Stelle nicht mehr näher eingegangen werden muss.

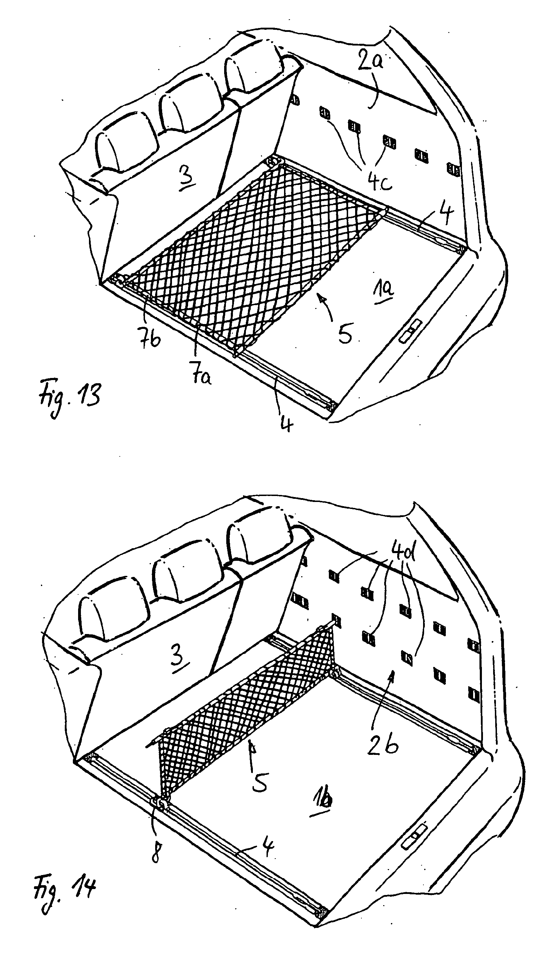

Die anhand der Fig. 12 und 13 dargestellte Ausführungsform entspricht im wesentlichen der Ausführungsform nach den Fig. 1 bis 10. Einziger Unterschied ist es, dass bei dieser Ausführungsform in den Seitenwandungen 2a keine Führungsschienen, sondern vielmehr Halteaufnahmen 4c integriert sind. Dabei ist jeder Seitenwandung 2a eine horizontal in Fahrzeuglängsrichtung verlaufende Reihe von Halteaufnahmen 4c zugeordnet. Alle Halteaufnahmen 4c sind gleichmäßig zueinander beabstandet.

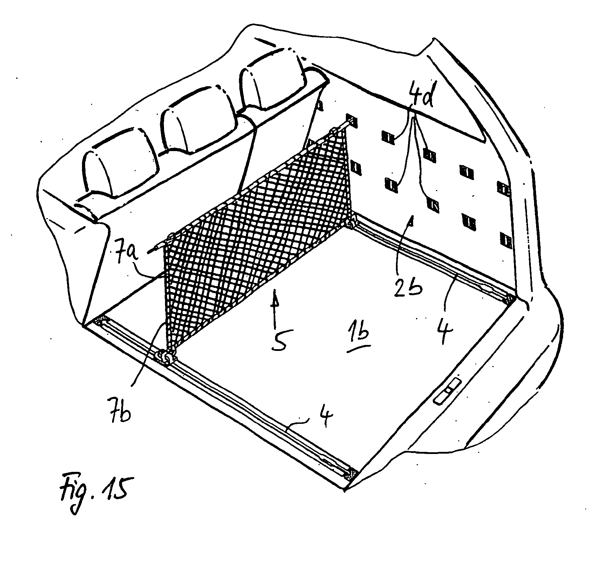

Auch bei der Ausführungsform nach den Fig. 14 und 15 ist einziger Unterschied, dass in den Seitenwandungen 2b nicht nur eine Reihe von Halteaufnahmen, sondern vielmehr zwei zueinander parallel übereinander liegende Reihen von Halteaufnahmen 4d vorgesehen sind. Die untere Reihe von Halteaufnahmen 4d ist etwa auf der Hälfte der Höhe der oberen Reihe von Halteaufnahmen 4d in der jeweiligen Seitenwandung 2b angeordnet. Die Quererstreckungseinheit 5 weist einen teleskopierbaren Rahmen auf, wobei die zusammengeschobene Stellung der teleskopierbaren Längsprofile des Rahmens so dimensioniert ist, dass in dieser zusammengeschobenen Stellung die Quererstreckungseinheit 5 in der unteren Reihe von Halteaufnahmen 4d positioniert werden kann. In der ausgezogenen Stellung des Rahmens, in der die Profilabschnitte 7a und 7b teleskopförmig auseinandergezogen sind, kann die Quererstreckungseinheit 5 gemäß Fig. 15 in der oberen Reihe von Halteaufnahmen 4d fixiert werden.

## Patentansprüche

1. Laderaumfunktionsvorrichtung für ein Kraftfahrzeug, insbesondere einen Personenkraftwagen, mit wenigstens zwei zueinander parallelen Führungsschienen, die wenigstens einer Laderaumbegrenzungsfläche zugeordnet sind, wobei in jeder Führungsschiene wenigstens ein Funktionsschlitten längs verfahrbar gelagert ist, und wobei Blockiermittel zum Arretieren des Funktionsschlittens relativ zu der Führungsschiene vorgesehen sind, wobei jeder Führungsschiene (4) wenigstens ein Funktionsschlitten (8) zugeordnet ist, und wobei eine zumindest abschnittsweise formstabile Quererstreckungseinheit (5, 5a) vorgesehen ist, die sich zwischen den Führungsschienen (4) erstreckt, **dadurch gekennzeichnet, dass** die Quererstreckungseinheit (5, 5a) mit den Funktionsschlitten (8) derart verbunden ist, dass die Quererstreckungseinheit (5, 5a) längst der Laderaumbegrenzungsfläche (1) verschiebbar ist, und dass die Quererstreckungseinheit (5, 5a) um eine quer zu Längsachsen der Führungsschienen (4) verlaufende Schwenkachse (S) an den Funktionsschlitten (8) schwenkbeweglich gelagert ist.

2. Laderaumfunktionsvorrichtung nach Anspruch 1, **dadurch gekennzeichnet, dass** die Quererstreckungseinheit (5) in wenigstens einer Ebene teleskopierbar ausgeführt ist.

3. Laderaumfunktionsvorrichtung nach Anspruch 1 oder 2, **dadurch gekennzeichnet, dass** die Quererstreckungseinheit einen ebenen Rahmen (6, 7, 9) umfasst.

4. Laderaumfunktionsvorrichtung nach Anspruch 3, **dadurch gekennzeichnet**, da**s**s in dem Rahmen (6, 7, 9) eine Netzanordnung (13) aufgespannt ist.

5. Laderaumfunktionsvorrichtung nach Anspruch 3, **dadurch gekennzeichnet, dass** der Rahmen (6, 7, 9) mit wenigstens einem Paar von einander gegenüberliegenden Rahmenprofilen (7) ausgeführt ist, die teleskopierbar gestaltet sind.

6. Laderaumfunktionsvorrichtung nach Anspruch 1, **dadurch gekennzeichnet, dass** die Quererstreckungseinheit als formstabile Platte (5a) ausgeführt ist.

7. Laderaumfunktionsvorrichtung nach einem der Ansprüche 3 bis 5, **dadurch gekennzeichnet, dass** Mittel (11, 12; 19, 20) zum lösbaren Arretieren des Rahmens (6, 7, 9) an wenigstens einer laderaumfesten Begrenzungsfläche (1, 2; 1a, 2a; 1b, 2b) in wenigstens einer aufrechten Funktionsposition vorgesehen sind.

8. Laderaumfunktionsvorrichtung nach wenigstens einem der vorhergehenden Ansprüche, **dadurch gekennzeichnet, dass** Mittel (19, 20) zum Führen der Quererstreckungseinheit (5) in wenigstens einer Führungsschiene (4) vorgesehen sind, die in Abstand zu dem wenigstens einen Funktionsschlitten (8) an der Quererstreckungseinheit (5) angeordnet sind.

9. Laderaumfunktionsvorrichtung nach Anspruch 7 und 8, **dadurch gekennzeichnet, dass** die Mittel zum lösbaren Arretieren die Mittel zum Führen der Quererstreckungseinheit umfassen.

10. Laderaumfunktionsvorrichtung nach einem der vorhergehenden Ansprüche, **dadurch gekennzeichnet, dass** in den aufrecht angeordneten Laderaumbegrenzungsflächen (2, 2a, 2b) Funktionsaufnahmen (4c, 4d) zur Sicherung oder Führung der Quererstreckungseinheit (5, 5a) in aufrechter Funktionsposition vorgesehen sind.

## Claims

1. Loading space functional arrangement for a motor vehicle, in particular a passenger vehicle, having at least two parallel guide rails that are associated with at least one loading space boundary surface, wherein at least one functional carriage is mounted in each guide rail so as to be longitudinally displaceable, and wherein blocking means for arresting the functional carriage relative to the guide rail are provided, wherein at least one functional carriage (8) is assigned to each guide rail (4), and wherein a transversely extending unit (5, 5a) that is dimensionally stable at least in sections and extends between the guide rails (4) is provided, **characterised in that** the transversely extending unit (5, 5a) is connected to the functional carriages (8) in such a way that the transversely extending unit (5, 5a) is slidable along the loading space boundary surface (1), and **in that** the transversely extending unit (5, 5a) is mounted on the functional carriages (8) so as to pivot about a pivot axis (S) running transversely to the longitudinal axes of the guide rails (4).

2. Loading space functional arrangement according to claim 1, **characterised in that** the transversely extending unit (5) is constructed to be telescopic in at least one plane.

3. Loading space functional arrangement according to claim 1 or 2, **characterised in that** the transversely extending unit comprises a planar frame (6, 7, 9).

4. Loading space functional arrangement according to claim 3, **characterised in that** a netting arrangement (13) is mounted in the frame (6, 7, 9).

5. Loading space functional arrangement according to claim 3, **characterised in that** the frame (6, 7, 9) is constructed with at least one pair of opposing frame profiles (7) of telescopic configuration.

6. Loading space functional arrangement according to claim 1, **characterised in that** the transversely extending unit is in the form of a dimensionally stable panel (5a).

7. Loading space functional arrangement according to any one of claims 3 to 5, **characterised in that** means (11, 12; 19, 20) are provided for releasably arresting the frame (6, 7, 9) in at least one upright functional position on at least one boundary surface (1, 2; 1a, 2a; 1b, 2b) built into the loading space.

8. Loading space functional arrangement according to at least one of the preceding claims, **characterised in that** means (19, 20) for guiding the transversely extending unit (5) in at least one guide rail (4) are provided, which are arranged on the transversely extending unit (5) spaced from the at least one functional carriage (8).

9. Loading space functional arrangement according to claims 7 and 8, **characterised in that** the means for releasable arrest comprise means for guiding the transversely extending unit.

10. Loading space functional arrangement according to any one of the preceding claims, **characterised in that** functional seats (4c, 4d) for securing or guiding the transversely extending unit (5, 5a) in the upright functional position are provided in the upright loading space boundary surfaces (2, 2a, 2b).

## Revendications

1. Dispositif fonctionnel pour compartiment de chargement d'un véhicule automobile, en particulier d'une voiture particulière, comprenant au moins deux rails de guidage parallèles entre eux qui sont attribués au moins à une surface de délimitation du compartiment de chargement, au moins un coulisseau fonctionnel étant placé de manière mobile longitudinalement dans chaque rail de guidage et des moyens de blocage pour bloquer le coulisseau fonctionnel par rapport au rail de guidage étant prévus, au moins un coulisseau fonctionnel (8) étant attribué à chaque rail de guidage (4), et au moins une unité d'extension transversale (5, 5a) de forme stable par tronçons qui s'étend entre les rails de guidage (4) étant prévue, **caractérisé en ce que** l'unité d'extension transversale (5, 5a) est reliée de telle manière aux coulisseaux fonctionnels (8) que l'unité d'extension transversale (5, 5a) est déplaçable le long de la surface de délimitation du compartiment de chargement (1), et **en ce que** l'unité d'extension transversale (5, 5a) est logée de manière à pouvoir être déplacé par pivotement sur les coulisseaux fonctionnels (8) autour d'un axe de pivotement (S) transversal aux axes longitudinaux des rails de guidage (4).

2. Dispositif fonctionnel pour compartiment de chargement selon la revendication 1, **caractérisé en ce que** l'unité d'extension transversale (5) est dirigée de manière télescopique dans au moins un plan.

3. Dispositif fonctionnel pour compartiment de chargement selon la revendication 1 ou 2, **caractérisé en ce que** l'unité d'extension transversale comprend un cadre (6, 7, 9) plat.

4. Dispositif fonctionnel pour compartiment de chargement selon la revendication 3, **caractérisé en ce qu'**un agencement de filet (13) est tendu dans le cadre (6, 7, 9).

5. Dispositif fonctionnel pour compartiment de chargement selon la revendication 3, **caractérisé en ce que** le cadre (6, 7, 9) est réalisé avec au moins une paire de profilés de cadre (7) qui se font face et qui sont télescopiques.

6. Dispositif fonctionnel pour compartiment de chargement selon la revendication 1, **caractérisé en ce que** l'unité d'extension transversale est une plaque (5a) de forme stable.

7. Dispositif fonctionnel pour compartiment de chargement selon l'une des revendications 3 à 5, **caractérisé en ce que** des moyens (11, 12 ; 19, 20) pour bloquer le cadre (6, 7, 9) de manière amovible sont prévus sur au moins une surface de délimitation (1, 2 ; 1a, 2a ; 1b, 2b) fixe du compartiment de chargement dans au moins une position fonctionnelle verticale.

8. Dispositif fonctionnel pour compartiment de chargement selon au moins l'une des revendications précédentes, **caractérisé en ce que** des moyens (19, 20) pour guider l'unité d'extension transversale (5) sont prévus dans au moins un rail de guidage (4) et sont placés à distance de l'au moins un coulisseau de guidage (8) sur l'unité d'extension transversale (5).

9. Dispositif fonctionnel pour compartiment de chargement selon les revendications 7 et 8, **caractérisé en ce que** les moyens pour bloquer de manière amovible comprennent les moyens pour guider l'unité d'extension transversale.

10. Dispositif fonctionnel pour compartiment de chargement selon l'une des revendications précédentes, **caractérisé en ce que** dans les surfaces de délimitation du compartiment de chargement (2, 2a, 2b) disposées verticalement, des réceptions fonctionnelles (4c, 4d) sont prévues pour fixer ou guider l'unité d'extension transversale (5, 5a) en position fonctionnelle verticale.
